# EUROPÄISCHE PATENTSCHRIFT

(11) **EP 2 314 438 B1**
(45) Veröffentlichungstag und Bekanntmachung des Hinweises auf die Patenterteilung: **27.06.2012**
(21) Anmeldenummer: 09179138.4
(22) Anmeldetag: 14.12.2009
(51) Int. Cl.: B29C 45/27

(54) **Düsenanordnung, Formplatte sowie Verfahren zur Montage einer Düsenvorrichtung**
Nozzle assembly, mould plate and method for mounting a nozzle device
Ensemble de buse, plaque de moule ainsi que procédé de montage d'un système de buse

(30) Priorität: 22.10.2009 DE 102009050400
(43) Veröffentlichungstag der Anmeldung: 27.04.2011
(73) Patentinhaber: Schreck, Hans, 35099 Burgwald-Bottendorf (DE)
(72) Erfinder: Schreck, Hans, 35099 Burgwald-Bottendorf (DE)
(74) Vertreter: Tappe, Hartmut

(56) Entgegenhaltungen:
- EP-A1- 0 882 563
- EP-A1- 2 228 193
- DE-A1-102008 028 577
- US-A- 5 208 052

## Beschreibung

Die Erfindung betrifft eine Düsenanordnung sowie ein Verfahren zur Montage einer Düsenvorrichtung zum Anspritzen von insbesondere Kunststoffformteilen, wobei die Düsenvorrichtung in einer Formplatte eines Formwerkzeugs einsetzbar ist, wobei die Düsenvorrichtung einen Düsenkörper mit zumindest einer Spitzeneinrichtung umfasst, wobei die Spitzeneinrichtung über eine Außenfläche des Düsenkörpers hervorragt, wobei in der Formplatte eine Formkavität und eine Ausnehmung zur Aufnahme der Düsenvorrichtung ausgebildet ist, wobei die Spitzeneinrichtung zusammen mit der Ausnehmung der Formplatte einen Einspritzkanal der Formkavität ausbildet, wobei die Ausnehmung eine Montageöffnung für die Düsenvorrichtung ausbildet.

Die aus dem Stand der Technik bekannten Düsenvorrichtungen sind regelmäßig aus einem Düsenkörper mit zumindest einer Spitzeneinrichtung gebildet, wobei die Spitzeneinrichtung eine Düsenspitze mit einem, die Düsenspitze koaxial umgebenden Dichtring umfasst. Die Spitzeneinrichtung bzw. Düsenspitze ist in der Regel in Richtung einer Längsachse des Düsenkörpers an diesem angeordnet. Die Düsenvorrichtung wird dann von einer Oberseite der Formplatte in die darin ausgebildete Ausnehmung eingesetzt. Die Oberseite der Formplatte wird wiederum auf eine so genannte Rahmenplatte aufgespannt, an die ein Heißkanalverteiler angeschlossen ist. Die Düsenvorrichtung kann so durch die Rahmenplatte hindurch über eine Zuführleitung mit plastifiziertem Kunststoffmaterial versorgt werden. Die Ausnehmung der Formplatte ist so ausgebildet, dass der Düsenkörper die Ausnehmung im Wesentlichen ausfüllt. Auch ist die Formkavität bzw. die Einspritzöffnung der Formkavität immer unterhalb der Düsenvorrichtung angeordnet. Der Düsenkörper wird in der Ausnehmung mittels eines Zentrierbundes oder anderer, am Düsenkörper angeordneten Befestigungselemente an der Formplatte fixiert. Diese Befestigung erfolgt immer im Bereich der Oberseite der Formplatte, da unterhalb des Düsenkörpers die Formkavität angeordnet ist. Bei diesen Düsenvorrichtungen ist es insbesondere nachteilig, dass für eine Montage bzw. Demontage der Düsenvorrichtung immer die Formplatte von der Rahmenplatte getrennt werden muss, wenn der Düsenkörper beispielsweise aus der Ausnehmung für Reinigungszwecke entnommen werden soll. Auch ist es, bedingt durch die Ausbildung der Ausnehmung, nicht möglich Düsenvorrichtungen mit schrägen oder orthogonal zur Längsachse des Düsenkörpers verlaufenden Düsespitzen in die Ausnehmung einzusetzen. Die Ausnehmung müsste in diesem Fall wesentlich größer als der jeweilige Düsenkörper ausgebildet sein, da die Düsenspitzen den Düsenkörper seitlich überragen.

Zur Lösung dieses Problems sind aus dem Stand der Technik Düsenvorrichtungen bekannt, die an ihrer Umfangsfläche eine Mehrzahl von Spitzeneinrichtungen aufweisen. Zur Verwendung dieser Düsenvorrichtungen ist es notwendig die betreffende Formplatte geteilt bzw. mehrteilig auszubilden, damit die Düsenvorrichtung in die Ausnehmung der Formplatte eingesetzt werden kann. Für bevorzugt verwendete, nicht teilbare Formplatten existieren Düsenvorrichtungen bei denen die Düsenspitzen über eine Ausnehmung in einem Bodenbereich eines Düsenkörpers in diesen einsetzbar sind. Dadurch wird zunächst die Montage des Düsenkörpers in der Ausnehmung der Formplatte und nachfolgend die Montage der Düsenspitzen, welche den Düsenkörper nach Außen hin überragen, ermöglicht. Nachteilig ist hier, dass die Düsenspitzen vergleichsweise schwierig zu montieren sind, und der Düsenkörper relativ teuer in der Herstellung ist. Auch sind diese Düsenkörper vergleichsweise groß, da die Öffnung das Einsetzen einer Düsenspitze ermöglichen muss. Auch ist die Verwendung von Nadelverschlüssen für derartige Düsenspitzen nicht möglich, da eine Betätigung des Nadelverschlusses eine Umlenkmechanik unmittelbar hinter den Düsenspitzen erfordern würde. Letztendlich bedarf es auch wieder einer Fixierung des Düsenkörpers an der Oberseite der Formplatte oder der Rahmenplatte. Die Düsenspitzen können dann zwar von einer Unterseite der Formplatte her ausgewechselt werden, jedoch erfordert eine Demontage des Düsenkörpers immer eine komplette Demontage der Formplatte bzw. Rahmenplatte. Insbesondere wenn die Düsenvorrichtung nur eine Spitzeneinrichtung aufweisen soll, ist diese Form von Düsenkörper mit der speziellen Art der Düsenspitzenmontage nicht wirtschaftlich einsetzbar.

Aus der nachveröffentlichten EP 2 228 193 A1 ist eine Düsenanordnung mit einer Düsenvorrichtung in einer unteilbaren Formplatte bekannt. Hier ist es zunächst erforderlich, für eine Montage der Düsenvorrichtung in der Formplatte einen Düsenkörper in eine Ausnehmung der Formplatte einzusetzen und nachfolgend Spitzeneinrichtungen über eine Düsenspitzenaufnahme des Düsenkörpers zu montieren. Die Spitzeneinrichtungen sind einander gegenüberliegend relativ zur Längsachse des Düsenkörpers angeordnet, so dass die Düsenvorrichtung nicht zusammen mit den Spitzeneinrichtungen in einer Ausnehmung eingesetzt und montiert werden kann.

Die gattungsbildende DE 10 2008 028 577 A1 zeigt eine Düsenanordnung, bei der ein Düsenkörper in einer Ausnehmung einer Formplatte eingesetzt ist. An dem Düsenkörper ist eine Spitzeneinrichtung befestigt, die über eine Außenfläche des Düsenkörpers hervorragt und einen Einspritzkanal mit der Ausnehmung der Formplatte für eine Formkavität ausbildet. Weiter bildet die Ausnehmung eine Montageöffnung für eine Düsenvorrichtung aus. Die Formplatte ist aus einem ersten Teil und einem zweiten Teil und damit teilbar ausgebildet. Dies ist zwangsläufig erforderlich, da die Düsenvorrichtung in einer Montageposition in jedem Fall immer größer ist als eine Montageöffnung.

Der vorliegenden Erfindung liegt daher die Aufgabe zugrunde, eine Düsenanordnung, eine Formplatte für eine Düsenanordnung und ein Verfahren zur Montage einer Düsenvorrichtung vorzuschlagen, die bzw. das eine Montage- bzw. Demontage einer Düsenvorrichung in einer unteilbaren Formplatte vereinfacht.

Diese Aufgabe wird durch eine Düsenanordnung mit den Merkmalen des Anspruchs 1, eine Formplatte mit den Merkmalen des Anspruchs 18 sowie ein Verfahren zur Montage einer Düsenvorrichtung mit den Merkmalen des Anspruchs 20 gelöst.

Die erfindungsgemäße Düsenanordnung zum Anspritzen von insbesondere Kunststoffformteilen umfasst zumindest eine Düsenvorrichtung, wobei die Düsenvorrichtung in eine unteilbare Formplatte eines Formwerkzeugs einsetzbar ist, wobei die Düsenvorrichtung einen Düsenkörper mit zumindest einer Spitzeneinrichtung umfasst, wobei die Spitzeneinrichtung über eine Außenfläche des Düsenkörpers hervorragt, wobei in der Formplatte eine Formkavität und eine Ausnehmung zur Aufnahme der Düsenvorrichtung ausgebildet ist, wobei die Spitzeneinrichtung zusammen mit der Ausnehmung der Formplatte einen Einspritzkanal für die Formkavität ausbildet, wobei die Ausnehmung eine Montageöffnung für die Düsenvorrichtung ausbildet, durch die die Düsenvorrichtung zusammen mit der Spitzeneinrichtung in die Ausnehmung einsetzbar ist, und wobei zumindest ein Positionierelement vorgesehen ist, welches so in die Montageöffnung einsetzbar ist, dass die Düsenvorrichtung in der Ausnehmung formschlüssig fixierbar ist.

Demnach weist die Düsenvorrichtung eine Spitzeneinrichtung auf, die fest mit dem Düsenkörper verbunden und bei in der Formplatte eingebautem Düsenkörper nicht auswechselbar ist. Der Düsenkörper kann so vergleichsweise kleiner und kostengünstiger hergestellt werden. Da der Düsenkörper zusammen mit der montierten Spitzeneinrichtung durch die Montageöffnung in die Ausnehmung der Formplatte einsetzbar ist, ist die Ausnehmung so ausgebildet, dass zumindest ein Spalt zwischen dem Düsenkörper und dem Formwerkzeug ausgebildet ist. Das Positionierelement ist so ausgebildet, dass es den Spalt zwischen dem Düsenkörper und einer Innenwandung der Ausnehmung der Formplatte überbrücken kann. Für eine Montage wird zunächst die Düsenvorrichtung bzw. der Düsenkörper mit der Spitzeneinrichtung durch die Montageöffnung in vertikaler Richtung relativ zur Formplatte in die Ausnehmung eingeführt. Dann wird der Düsenkörper in Richtung der Spitzeneinrichtung, horizontal oder schräg, bzw. bei einer Spitzeneinrichtung in Richtung einer Längsachse des Düsenkörpers, horizontal und nachfolgend vertikal in die vorgesehene Arbeitsposition gebracht, wobei dabei auch eine Düsenspitze in den Einspritzkanal eingebracht wird. Abschließend wird der Spalt zwischen Düsenkörper und Innenwandung durch Einsetzen des Positionierelements in die Montageöffnung bzw. in den Spalt überbrückt. Die Düsenvorrichtung ist nun in der Arbeitsposition mittels des Positionierelements formschlüssig fixiert. Das Positionierelement ist dabei ein von der Düsenvorrichtung unabhängiges Bauteil, welches lediglich zur Montage bzw. Demontage der Düsenvorrichtung im Formwerkzeug dient. Diese besondere Ausbildung der Düsenanordnung ermöglicht es, die Montageöffnung an der Formplatte beliebig, das heißt im Wesentlichen in einer Oberseite oder Unterseite der Formplatte vorzusehen. Die Düsenvorrichtung kann dann von der für eine Montage günstigsten Seite der Formplatte einfach in diese eingesetzt werden, ohne dass die Spitzeneinrichtung demontiert oder eine räumliche Ausrichtung der Spitzeneinrichtung relativ zur Formplatte berücksichtigt werden müsste. Auch ist der Düsenkörper vergleichsweise klein und kostengünstig herstellbar.

Besonders vorteilhaft ist es, wenn das Positionierelement an einer der Spitzeneinrichtung abgewandten Oberfläche des Düsenkörpers anordbar ist. Vorzugsweise kann das Positionierelement so angeordnet werden, dass es gegenüberliegend der Spitzeneinrichtung am Düsenkörper anliegt. So kann sichergestellt werden, dass die Spitzeneinrichtung mit einem Dichtring bzw. Dichtungselement an die Ausnehmung der Formplatte angedrückt wird. Hierdurch kann insbesondere eine verbesserte Abdichtung des Einspritzkanals bewirkt werden.

Besonders vorteilhaft ist es, wenn die Düsenvorrichtung eine Breite b und die Montageöffnung eine Breite b+n aufweisen, wobei die Ausnehmung eine Montagebreite b+x+n und das Positionierelement eine Breite x+n aufweisen. Folglich kann die Düsenvorrichtung dann leicht in die Montageöffnung eingesetzt werden, wobei die Breite des Positionierelements dem Maß einer Spaltbreite x+n entspricht. Die vorbezeichneten Abmessungen beziehen sich jeweils auf horizontale Abmaße relativ zu einer Formplatte.

In einer Ausführungsform kann die Breite x+n des Positionierelements so ausgebildet sein, dass das Positionierelement bei einer Betriebstemperatur der Düsenvorrichtung die Düsenvorrichtung kraftschlüssig in der Ausnehmung fixiert. Insbesondere eine Maßtoleranz des Positionierelements kann so gewählt sein, dass sich das Positionierelement nur bei erkalteter Düsenvorrichtung bzw. Formplatte im Spalt zwischen dem Düsenkörper und der Formplatte bewegen lässt. Bei Betriebstemperatur kann dann das Positionierelement aufgrund der Wärmeausdehnung des Düsenkörpers und der Formplatte bzw. des Positionierelements selbst eine Druckkraft auf den Düsenkörper ausüben, die beispielsweise eine besonders gute Abdichtung der Spitzeneinrichtung an einer Innenwandung der Ausnehmung bewirkt.

Eine Wärmeströmung über das Positionierelement kann besonders wirkungsvoll vermindert werden, wenn das Positionierelement eine Ausnehmung aufweist, die so ausgebildet ist, dass eine Kontaktfläche zwischen einer Oberfläche des Düsenkörpers und einer Anlagefläche des Positionierelements minimiert wird. Beispielsweise kann im Positionierelement eine Nut oder Bohrung ausgebildet sein, so dass das Positionierelement den Düsenkörper nur punktuell kontaktiert. Eventuelle Wärmeverluste des Düsenkörpers an die Formplatte können durch diese Art der Isolierung minimiert werden.

Um nicht nur in einer horizontalen Richtung eine Fixierung der Düsenvorrichtung in der Ausnehmung zu bewirken, kann das Positionierelement so ausgebildet sein, dass es eine Kante des Düsenkörpers umgreift. Folglich kann die Düsenvorrichtung auch in vertikaler Richtung in der Ausnehmung fixiert werden.

Das Positionierelement kann dann so ausgebildet sein, dass die Montageöffnung beispielsweise vollständig von dem Positionierelement verschlossen wird.

Um eine adäquate Befestigung des Positionierelements in der Formplatte zu erreichen, kann das Positionierelement so ausgebildet sein, dass es mittels eines Befestigungselements mit der Formplatte lösbar verbindbar ist. Das Befestigungselement kann insbesondere eine Schraube sein, welche eine Form- und/oder kraftschlüssige Verbindung des Positionierelements mit der Formplatte ermöglicht. So ist sichergestellt, dass das Positionierelement in der Ausnehmung nicht unbeabsichtigt verrutscht oder auch aus dieser heraus fällt. Weiter kann das Befestigungselement auch dazu genutzt werden, eine zusätzliche Druckkraft in vertikaler oder horizontaler Richtung auf den Düsenkörper auszuüben.

Auch kann die Düsenvorrichtung eine Nadelverschlusseinrichtung umfassen. Die Nadelverschlusseinrichtung kann unabhängig von der relativen Lage der Spitzeneinrichtung zur Formplatte angeordnet sein. So kann beispielsweise eine Düsennadel horizontal, durch die Formplatte und das Positionierelement hindurch in den Düsenkörper hineingeführt sein. Auch kann die Nadelverschlusseinrichtung im Wesentlichen in oder an der Rahmenplatte ausgebildet sein. Grundsätzlich ist durch die Verwendung des Positionierelements und durch die Ausbildung der Ausnehmung in der Formplatte die Ausbildung einer Nadelverschlusseinrichtung an der Düsenvorrichtung nicht limitiert.

In einer Ausführungsform einer Düsenanordnung kann am Düsenkörper eine Mehrzahl von Spitzeneinrichtungen ausgebildet sein. So wird es möglich mit einer Düsenvorrichtung viele Formnester bzw. Formkavitäten auf kleinem Raum in einer Formplatte auszubilden.

In einer weiteren Ausführungsform kann eine Mehrzahl von Düsenvorrichtungen mittels eines Positionierelements fixierbar sein. Demnach kann eine Mehrzahl von Düsenvorrichtungen in einer oder mehreren Ausnehmungen in einer Formplatte angeordnet und fixiert werden, wobei zur Fixierung insgesamt nur ein Positionierelement benötigt wird. Eine Montage bzw. Demontage der Düsenvorrichtungen wird dadurch erheblich vereinfacht.

Eine Fixierung der Düsenvorrichtung in vertikaler Richtung relativ zur Formplatte kann dadurch erzielt werden, dass am Düsenkörper ein Distanzelement angeordnet ist, dass den Düsenkörper relativ zur Formplatte in vertikaler Richtung positionieren kann. Das Distanzelement kann als eine Buchse ausgebildet sein, welche mittels einer Schraube am Düsenkörper unmittelbar befestigt ist. Auch kann eine Schraube zur Befestigung des Düsenkörpers am Formwerkzeug vorgesehen sein, wobei das Distanzelement dann in Art einer Unterlegscheibe zwischen dem Düsenkörper und dem Formwerkzeug koaxial zur Schraube angeordnet ist.

Eine vertikale Fixierung der Düsenvorrichtung kann auch dadurch erzielt werden, dass zwei Positionierelemente jeweils von einer Unterseite und einer gegenüberliegenden Oberseite der Formplatte in die Ausnehmung einsetzbar sind. So müssen am Formwerkzeug keine besonderen Anschläge zur Positionierung des Düsenkörpers vorgesehen werden. Vielmehr wird der Düsenkörper dann alleine durch die zwei Positionierelemente in vertikaler Richtung relativ zum Formkörper positioniert.

Weiter kann der Düsenkörper mit der Formplatte verschraubbar sein. So ist es möglich, den Düsenkörper zusätzlich, mittels einer Schraube an der Formplatte zu fixieren. Vorzugsweise kann dazu im Düsenkörper eine Gewindebohrung ausgebildet sein, die eine vertikale Fixierung des Düsenkörpers relativ zur Formplatte erlaubt.

Wenn am Düsenkörper ein Zuführleitungselement angeordnet ist, das selbstdichtend mit einem Heißkanalverteiler verbindbar ist, wird eine Montage der Düsenvorrichtung erheblich vereinfacht. Es muss dann lediglich die Düsenvorrichtung in den Heißkanalverteiler mit dem Zuführleitungselement eingesteckt werden. Insbesondere kann dann die Düsenvorrichtung von einer Unterseite der Formplatte in diese eingesetzt werden, ohne dass ein zusätzlicher Montageaufwand hinsichtlich einer Zuführleitungsverbindung notwendig wäre. Auch kann dann die Formplatte für eine Montage bzw. Demontage der Düsenvorrichtung an der Rahmenplatte verbleiben.

In einer Ausführungsform der Düsenanordnung kann eine Längsachse der Spitzeneinrichtung relativ zu einer Öffnungsebene der Montageöffnung parallel ausgebildet sein. Das heißt die Spitzeneinrichtung kann dann horizontal relativ zur Formplatte angeordnet sein, so dass sich ein Formnest bzw. die Formkavität seitlich neben der Düsenvorrichtung befindet.

In einer weiteren Ausführungsform der Düsenanordnung kann eine Längsachse der Spitzeneinrichtung relativ zu einer Öffnungsebene der Montageöffnung orthogonal ausgebildet sein. Die Formkavität bzw. eine Einspritzöffnung kann dann unterhalb der Düsenvorrichtung in der Formplatte angeordnet sein.

Gemäß einer weiteren Ausführungsform der Düsenanordnung kann eine Längsachse der Spitzeneinrichtung relativ zu einer Öffnungsebene der Montageöffnung schräg unter einem Winkel α ausgebildet sein. Das heißt die Spitzeneinrichtung kann dann schräg relativ zur Formplatte in dieser angeordnet sein, so dass ein schräges Anspritzen bzw. ein Anspritzen unter dem Winkel α der Formkavität erfolgen kann.

An der erfindungsgemäßen, unteilbar ausgebildeten Formplatte für eine erfindungsgemäße Düsenanordnung ist eine Montageöffnung für eine Düsenvorrichtung ausgebildet, wobei in der Montageöffnung ein Befestigungsabsatz für ein Positionierelement ausgebildet ist. Dadurch wird die Montage bzw. Demontage der Düsenanordnung erheblich vereinfacht, da das Positionierelement passgenau in der dafür vorgesehenen Montagelage relativ zur Düsenvorrichtung in der Formplatte angeordnet werden kann. Der Befestigungsabsatz dient somit einer Lagefixierung des Positionierelements und weist vorzugsweise Gewindebohrungen zur Ausbildung einer Schraubverbindung mit dem Positionierelement auf.

Die Montageöffnung kann in einer der Formkavität zugewandten Unterseite und/oder einer der Formkavität abgewandten Oberseite der Formplatte ausgebildet sein. Hierdurch wird eine Montage der Düsenanordnung bzw. Düsenvorrichtung von der Unterseite und/oder Oberseite der Formplatte ermöglicht. Insbesondere wenn die Montageöffnung in der Unterseite der Formplatte ausgebildet ist, ist eine Demontage der Formplatte von der Rahmenplatte nicht mehr zwingend notwendig, so dass die Düsenvorrichtung besonders einfach montiert bzw. ausgewechselt werden kann.

Weitere vorteilhafte Ausführungsformen einer Formplatte ergeben sich aus den Merkmalsbeschreibungen der auf den Vorrichtungsanspruch 1 rückbezogenen Unteransprüche.

Das erfindungsgemäße Verfahren zur Montage einer Düsenvorrichtung zum Anspritzen von insbesondere Kunststoffformteilen in einer unteilbaren Formplatte eines Formwerkzeugs umfasst eine Düsenvorrichtung mit einem Düsenkörper mit zumindest einer Spitzeneinrichtung, wobei die Spitzeneinrichtung über eine Außenfläche des Düsenkörpers hervorragt, wobei in der Formplatte eine Formkavität und eine Ausnehmung zur Aufnahme der Düsenvorrichtung ausgebildet ist, wobei die Ausnehmung als eine Montageöffnung für die Düsenvorrichtung ausgebildet ist, durch die die Düsenvorrichtung zusammen mit der Spitzeneinrichtung in die Ausnehmung eingesetzt wird, derart, dass die Spitzeneinrichtung zusammen mit der Ausnehmung der Formplatte einen Einspritzkanal für die Formkavität ausbildet, und wobei nachfolgend zumindest ein Positionierelement so in die Montageöffnung eingesetzt wird, dass die Düsenvorrichtung in der Ausnehmung formschlüssig fixiert wird. Hinsichtlich der sich aus den erfindungsgemäßen Verfahren ergebenden, vorteilhaften Wirkungen wird auf die vorstehenden Ausführungen zu den Vorrichtungsansprüchen verwiesen.

Weitere vorteilhafte Ausführungsformen des Verfahrens ergeben sich aus den Merkmalsbeschreibungen der auf die Vorrichtungsansprüche 1 und 18 rückbezogenen Unteransprüche.

Im Folgenden wird die Erfindung unter Bezugnahme auf die beigefügten Zeichnungen näher erläutert.

Es zeigen:
- **Fig. 1**: eine erste Ausführungsform einer Düsenanordnung mit ei- nem Formwerkzeug in einer Schnittansicht;
- **Fig. 2**: die erste Ausführungsform der Düsenanordnung mit dem Formwerkzeug in einer Schnittansicht orthogonal zur Schnittansicht aus **Fig. 1**;
- **Fig. 3**: die erste Ausführungsform der Düsenanordnung in einer Unteransicht;
- **Fig. 4**: eine zweite Ausführungsform einer Düsenanordnung in ei- ner Unteransicht;
- **Fig. 5**: eine dritte Ausführungsform einer Düsenanordnung in ei- ner Unteransicht;
- **Fig. 6**: eine vierte Ausführungsform einer Düsenanordnung in ei- ner Unteransicht;
- **Fig. 7**: eine fünfte Ausführungsform einer Düsenanordnung in ei- ner Unteransicht;
- **Fig. 8**: die erste Ausführungsform der Düsenanordnung mit dem Formwerkzeug in einer ersten Montageposition in einer Schnittansicht;
- **Fig. 9**: die erste Ausführungsform der Düsenanordnung mit dem Formwerkzeug in einer zweiten Montageposition in einer Schnittansicht;
- **Fig. 10**: die erste Ausführungsform der Düsenanordnung mit dem Formwerkzeug in einer dritten Montageposition in einer Schnittansicht;
- **Fig. 11**: eine sechste Ausführungsform einer Düsenanordnung mit einer zweiten Ausführungsform eines Formwerkzeugs in einer Schnittansicht;
- **Fig. 12**: die sechste Ausführungsform der Düsenanordnung mit dem Formwerkzeug in einer Montageposition in einer Schnittansicht;
- **Fig. 13**: eine siebte Ausführungsform einer Düsenanordnung mit der ersten Ausführungsform des Formwerkzeugs in einer Schnittansicht;
- **Fig. 14**: die siebte Ausführungsform der Düsenanordnung in einer Unteransicht;
- **Fig. 15**: eine achte Ausführungsform einer Düsenanordnung mit einer dritten Ausführungsform eines Formwerkzeugs in einer Montageposition in einer Schnittansicht;
- **Fig. 16**: eine neunte Ausführungsform einer Düsenanordnung mit einer vierten Ausführungsform eines Formwerkzeugs in einer Schnittansicht;
- **Fig. 17**: die neunte Ausführungsform der Düsenanordnung mit dem Formwerkzeug in einer Schnittansicht orthogonal zur Schnittansicht aus **Fig. 16**;
- **Fig. 18**: die neunte Ausführungsform der Düsenanordnung mit dem Formwerkzeug in einer ersten Montageposition in einer Schnittansicht;
- **Fig. 19**: die neunte Ausführungsform der Düsenanordnung mit dem Formwerkzeug in einer zweiten Montageposition in einer Schnittansicht;
- **Fig. 20**: die neunte Ausführungsform der Düsenanordnung mit dem Formwerkzeug in einer dritten Montageposition in einer Schnittansicht;
- **Fig. 21**: die neunte Ausführungsform der Düsenanordnung mit dem Formwerkzeug in einer vierten Montageposition in einer Schnittansicht;
- **Fig. 22**: eine zehnte Ausführungsform einer Düsenanordnung mit einer fünften Ausführungsform eines Formwerkzeugs in einer Schnittansicht;
- **Fig. 23**: die zehnte Ausführungsform der Düsenanordnung mit dem Formwerkzeug in einer Schnittansicht orthogonal zur Schnittansicht aus **Fig. 22**;
- **Fig. 24**: eine elfte Ausführungsform einer Düsenanordnung mit ei- ner sechsten Ausführungsform eines Formwerkzeugs in einer Schnittansicht;
- **Fig. 25**: die elfte Ausführungsform der Düsenanordnung mit dem Formwerkzeug in einer Schnittansicht orthogonal zu der Schnittansicht aus **Fig. 24**;
- **Fig. 26**: eine zwölfte Ausführungsform einer Düsenanordnung in einer Unteransicht;
- **Fig. 27**: die elfte Ausführungsform der Düsenanordnung in einer Unteransicht;
- **Fig. 28**: die elfte Ausführungsform der Düsenanordnung mit dem Formwerkzeug in einer ersten Montageposition in einer Schnittansicht;
- **Fig. 29**: die elfte Ausführungsform der Düsenanordnung mit dem Formwerkzeug in einer zweiten Montageposition in einer Schnittansicht;
- **Fig. 30**: die elfte Ausführungsform der Düsenanordnung mit dem Formwerkzeug in einer dritten Montageposition in einer Schnittansicht;
- **Fig. 31**: die elfte Ausführungsform der Düsenanordnung mit dem Formwerkzeug in einer vierten Montageposition in einer Schnittansicht;
- **Fig. 32**: eine dreizehnte Ausführungsform einer Düsenanordnung mit einer siebten Ausführungsform eines Formwerkzeugs in einer Schnittansicht;
- **Fig. 33**: die dreizehnte Ausführungsform der Düsenanordnung mit dem Formwerkzeug in einer ersten Montageposition in ei- ner Schnittansicht;
- **Fig. 34**: die dreizehnte Ausführungsform der Düsenanordnung mit dem Formwerkzeug in einer zweiten Montageposition in einer Schnittansicht;
- **Fig. 35**: die dreizehnte Ausführungsform der Düsenanordnung mit dem Formwerkzeug in einer dritten Montageposition in einer Schnittansicht.

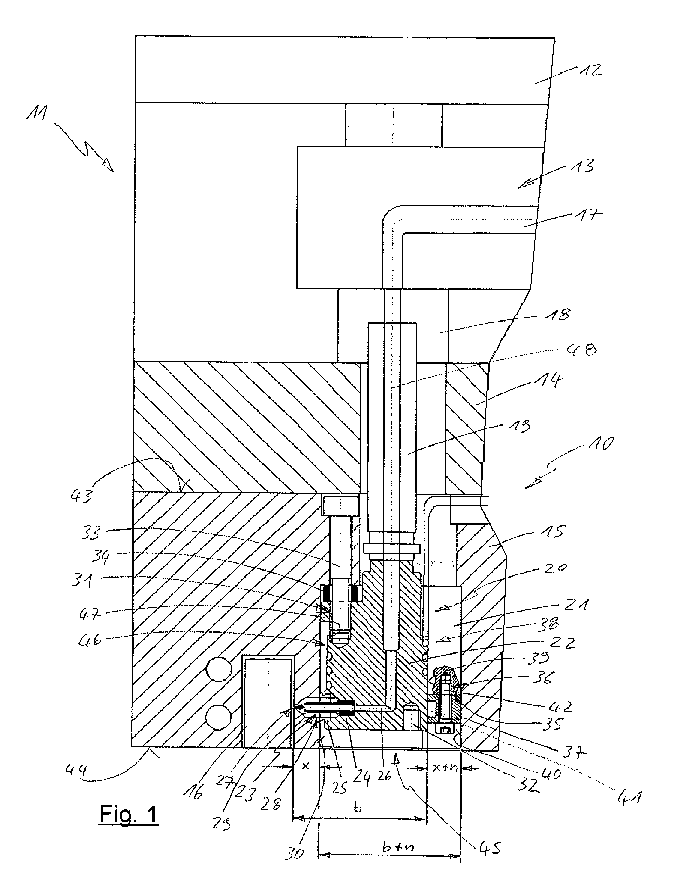

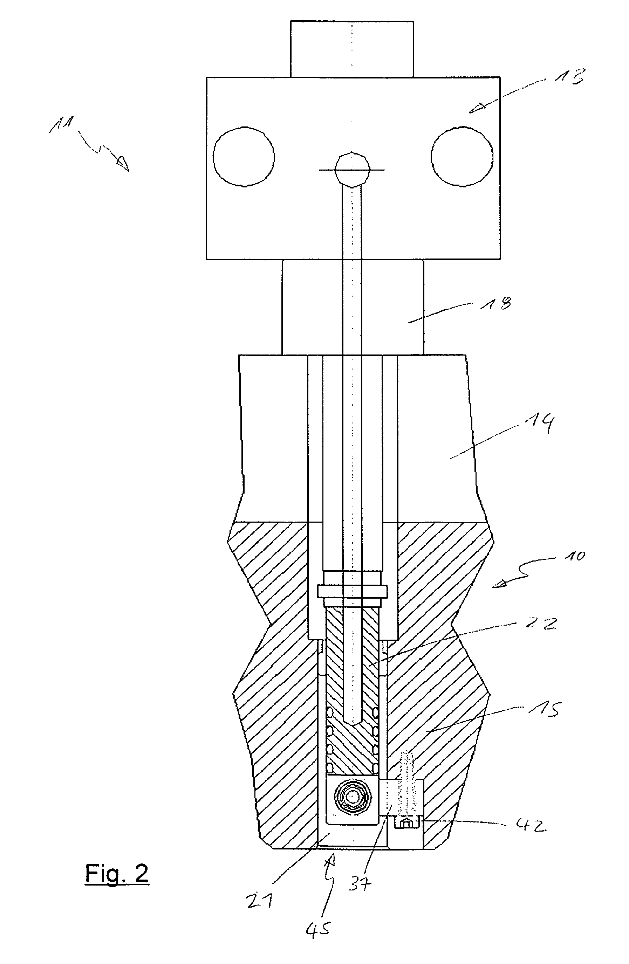

Eine Zusammenschau der **Fig. 1** bis **3** und **8** bis **10** zeigt eine Düsenanordnung 10 mit einem Formwerkzeug 11 in einer Einbaulage bzw. in einer Abfolge von Montagepositionen. Das Formwerkzeug 11 ist im Wesentlichen aus einer Aufspannplatte 12, welche mit einer hier nicht dargestellten Spritzgießmaschine in Verbindung steht, einem Heißkanalverteiler 13, einer Rahmenplatte 14 und einer Formplatte 15 gebildet. In der Formplatte 15 ist eine Formkavität 16 ausgebildet, die mit einem hier nicht dargestellten Formkontureinsatz einer weiteren, hier ebenfalls nicht dargstellten unteren Formplatte in Verbindung steht. In dem Heißkanalverteiler 13 ist eine Zuführleitung 17 für plastifiziertes Kunststoffmaterial ausgebildet, die mittels eines Zuführdüsenkopfes 18 des Heißkanalvertellers 13 an ein Zuführleitungselement 19 einer Düsenvorrichtung 20 selbstdichtend angeschlossen ist. Die Düsenvorrichtung 20 ist in eine Ausnehmung 21 der Formplatte 15 eingesetzt und umfasst weiter einen Düsenkörper 22 und eine Spitzeneinrichtung 23, welche aus einer Düsenspitze 24 und einem ringförmigen Dichtungselement 25 gebildet ist. Im Düsenkörper 22 ist ein Zuführkanal 26 ausgebildet, der durch die Düsenspitze 24 verläuft und plastifiziertes Kunststoffmaterial zu einer Einspritzöffnung 27 der Formkavität 16 fördert. Die Düsenspitze 24 und das Dichtungselement 25 bilden zusammen mit einer Kanalbohrung 28 der Ausnehmung 21 einen Einspritzkanal 29 für die Formkavität 16 aus. Das Dichtungselement 25 liegt dabei, den Einspritzkanal 29 abdichtend, an einer Innenwandung 30 der Ausnehmung 21 an. Weiter ist im Düsenkörper 22 eine erste Gewindebohrung 31 und eine zweite Gewindebohrung 32 ausgebildet, wobei die erste Gewindebohrung zur Befestigung des Düsenkörpers 22 bzw. der Düsenvorrichtung 20 an der Formplatte 15 mittels einer Schraube 33 dient. Zwischen der Formplatte 15 und dem Düsenkörper 22 ist ein die Schraube 33 umgebendes Distanzelement 34 vorgesehen. Die zweite Gewindebohrung 32 dient dem leichteren Entfernen der Düsenvorrichtung 20 aus der Ausnehmung 21.

In der Ausnehmung 21 ist ein Befestigungsabsatz 35 mit einer Gewindebohrung 36 ausgebildet, in den ein Positionierelement 37 der Düsenanordnung 10 eingesetzt ist. Das Positionierelement 37 überbrückt einen Spalt 38 zwischen einer Oberfläche 39 des Düsenkörpers 22 und einer Innenwandung 40 der Ausnehmung 21. Weiter ist in dem Positionierelement 37 eine Nut 41 ausgebildet, welche eine Überleitung von Wärmeenergie von der Düsenvorrichtung 20 auf die Formplatte 15 erschwert. Das Positionierelement 37 ist mittels einer Schraube 47 an der Formplatte 15 bzw. am Befestigungsabsatz 35 fest fixiert. Die Ausnehmung 21 ist durchgängig in der Formplatte 15 ausgebildet, das heißt von einer Oberseite 43 bis hin zu einer Unterseite 44 der Formplatte 15. Die Ausnehmung 21 bildet in der Unterseite 44 eine Montageöffnung 45 zur Montage bzw. Demontage der Düsenanordnung 10 aus. Eine Breite b+n der Montageöffnung 45 ist so bemessen, dass die Düsenvorrichtung 20 mit einer Breite b in diese in vertikaler Richtung einsetzbar ist. Die Spitzeneinrichtung 23 überragt dabei eine Außenfläche 46, insbesondere eine Nase 47 der Düsenvorrichtung 20 um ein Maß x. Der Spalt 38 weist demnach eine Spaltbreite x+n auf. Das Positionierelement 37 weist dabei so eine Maßtoleranz auf, dass es bei Raumtemperatur im Spalt 38 beweglich und somit in diesen einsetzbar ist. Bei Betriebstemperatur der Düsenvorrichtung 20 erfolgt aufgrund der jeweiligen Materialausdehnungen eine Klemmung des Positionierelementes 37 im Spalt 38, so dass das Dichtungselement 25 abdichtend an die Innenwandung 30 gepresst wird, wodurch gleichzeitig eine kraftschlüssige Fixierung der Düsenvorrichtung 20 in der Ausnehmung 21 erfolgt.

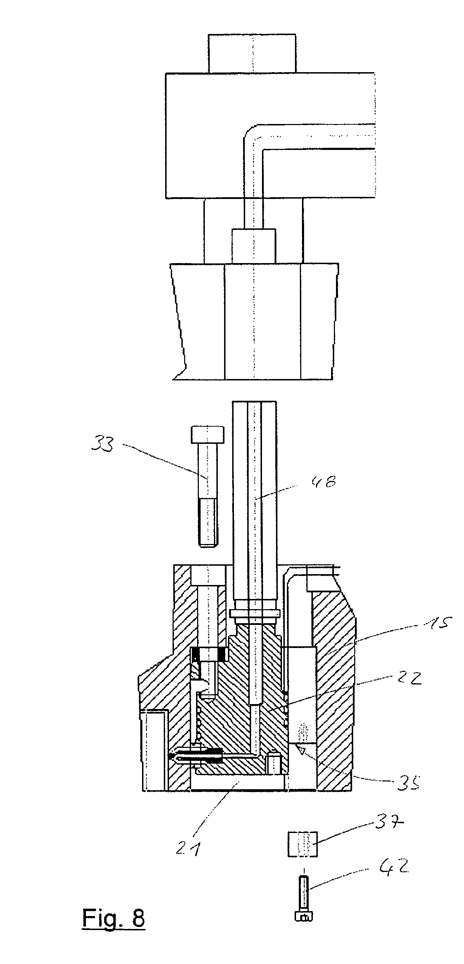

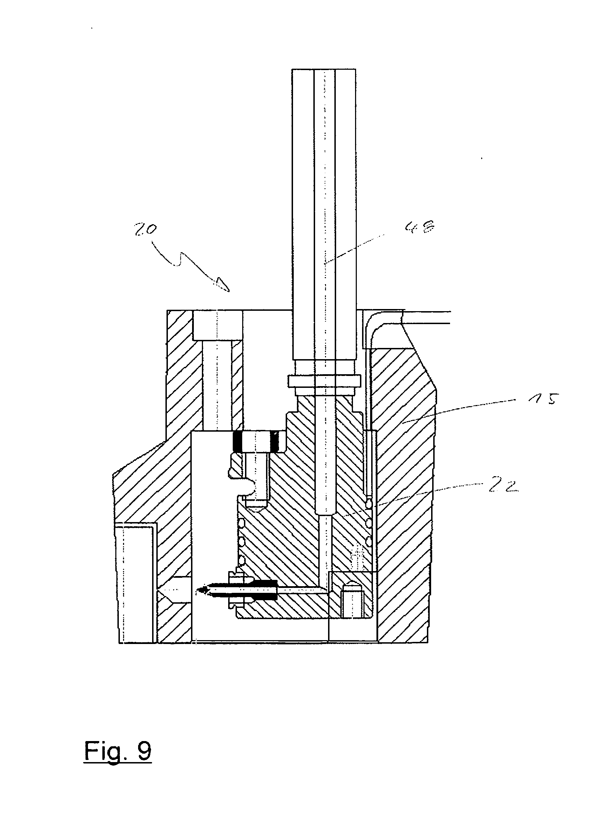

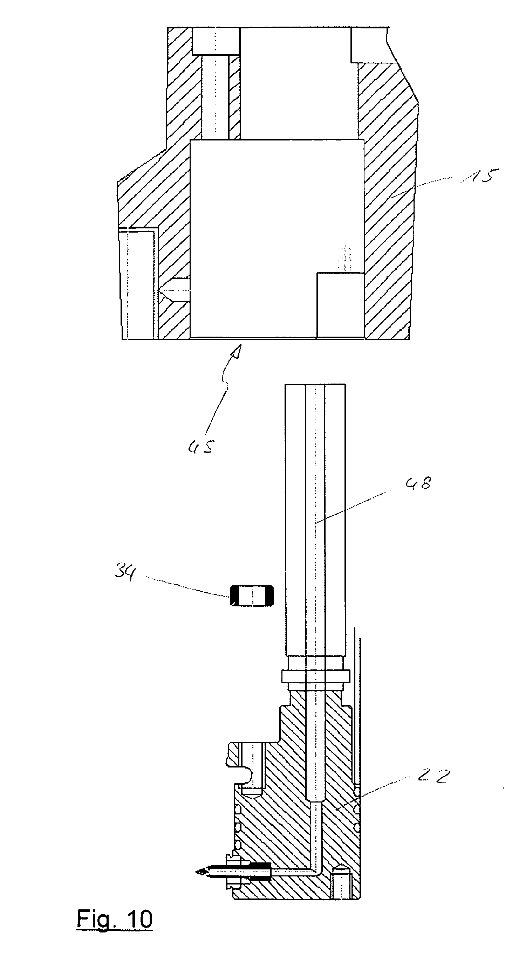

Eine Demontage der Düsenvorrichtung 20 aus dem Formwerkzeug 11 ist mit jeweils verschiedenen Montagepositionen aus den **Fig. 8** bis **10** ersichtlich. Zunächst wird das Positionierelement 37 durch Lösen der Schraube 42 vom Befestigungsabsatz 35 entfernt und aus der Ausnehmung 21 entnommen. Ebenso wird die Schraube 33 aus der Formplatte 15 entfernt. Wie in **Fig. 9** dargestellt, kann die Düsenvorrichtung 20 nun in horizontaler Richtung innerhalb der Ausnehmung 21 bewegt werden, so dass die Düsenspitze 24 aus der Kanalbohrung 28 vollständig entfernt wird. Abschließend kann, wie in **Fig. 10** dargestellt, die Düsenvorrichtung 20 in vertikaler Richtung bzw. in Richtung einer Längsachse 48 der Düsenvorrichtung 20 aus der Ausnehmung 21 durch die Montageöffnung 45 nach unten aus der Formplatte 15 entnommen werden.

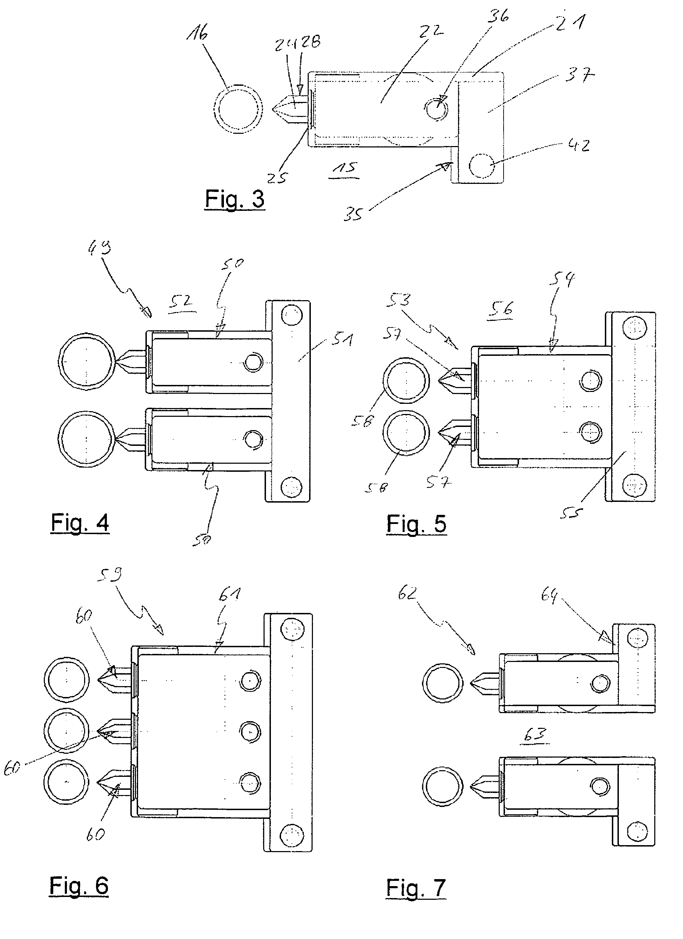

Die **Fig. 4** zeigt eine Düsenanordnung 49 mit zwei Düsenvorrichtungen 50 und einem Positionierelement 51 in einer nicht näher dargestellten Formplatte 52. Bei dieser Ausführungsform fixiert das Positionierelement 51 gleichzeitig die beiden Düsenvorrichtungen 50 in der Formplatte 52.

Gemäß **Fig. 5** ist eine Düsenanordnung 53 mit einer Düsenvorrichtung 54 und einem Positionierelement 55 in einer Formplatte 56 aufgenommen. Die Düsenvorrichtung 54 weist hier zwei Spitzeneinrichtungen 57 zum jeweiligen Anspritzen von Formkavitäten 58 auf.

**Fig. 6** zeigt eine Düsenanordnung 59 entsprechend der in **Fig. 5** gezeigten Düsenanordnung, jedoch mit insgesamt drei Spitzeneinrichtungen 60 und einer Düsenvorrichtung 61.

Alternativ kann die in **Fig. 3** gezeigte Düsenanordnung gemäß **Fig. 7** mit einer weiteren Düsenanordnung 62 in einer Formplatte 63 kombiniert werden. Hier ist ein Befestigungsabsatz 64 gegenüber dem Befestigungsabsatz 35 spiegelbildlich ausgebildet.

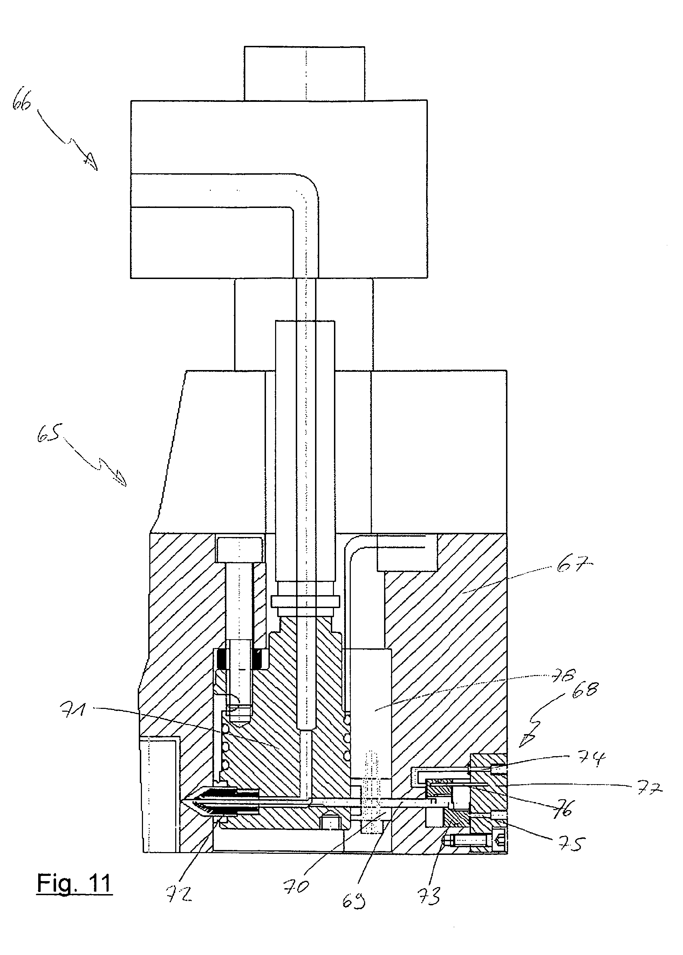

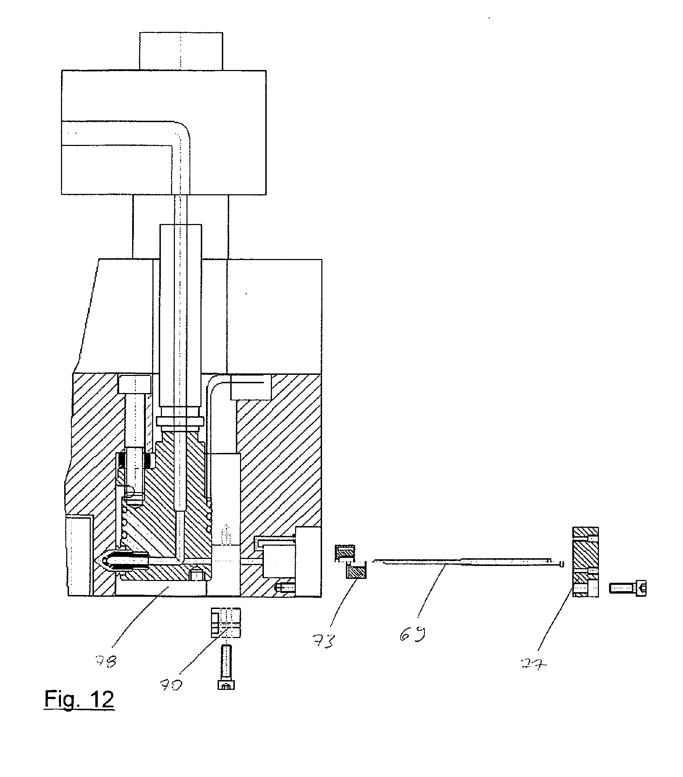

Eine Düsenanordnung 65 in einem Formwerkzeug 66 zeigen die **Fig. 11** und **12**. Im Unterschied zu der in **Fig. 1** dargestellten Düsenanordnung ist hier in einer Formplatte 67 des Formwerkzeugs 66 eine Nadelverschlusseinrichtung 68 angeordnet. Die Nadelverschlusseinrichtung 68 umfasst insbesondere eine Düsennadel 69, die sich durch ein Positionierelement 70 und einen Düsenkörper 71 bis hin zu einer Düsenspitze 72 erstreckt. Weiter sind ein fluidbetätigter Kolben 73 sowie notwendige Betätigungskanäle 74 und 75, eine Verdrehsicherung 76 und eine Verschlussplatte 77 vorgesehen. Entsprechend der Darstellung in **Fig. 12** wird zunächst die Verschlussplatte 77 mit dem Kolben 73 und der Düsennadel 69 demontiert, bevor das Positionierelement 70 aus einer Ausnehmung 78 der Formplatte 67 entnommen werden kann.

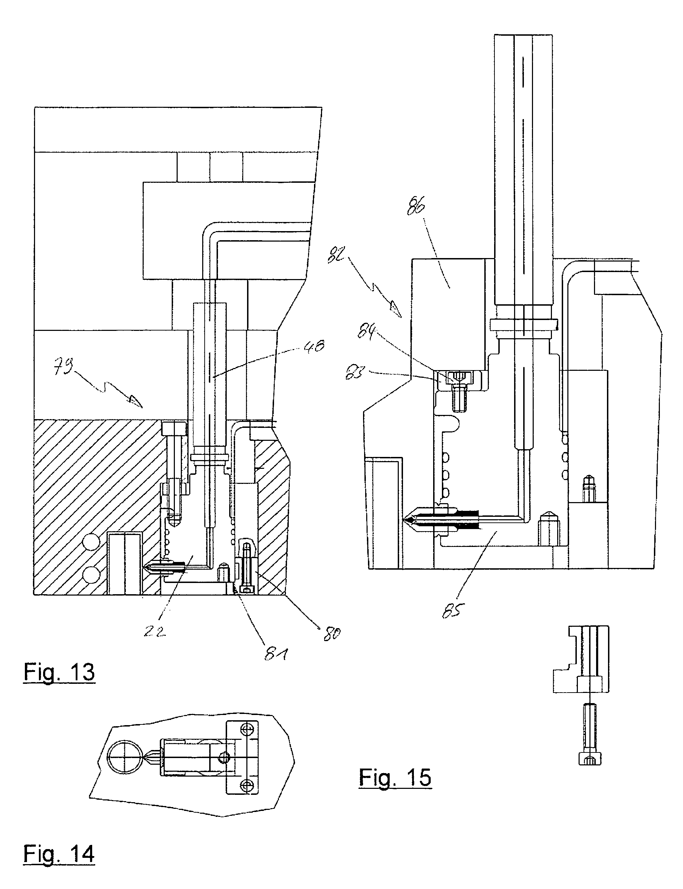

Die **Fig. 13** und **14** zeigen eine Düsenanordnung 79, bei der im Unterschied zu der in **Fig. 1** gezeigten Düsenanordnung ein Positionierelement 80 eine Kante 81 des Düsenkörpers 22 umgreift. Das Positionierelement 80 kann so auch eine Haltekraft in Richtung der Längsachse 48 bewirken.

Im Unterschied zu der in **Fig. 13** gezeigten Düsenanordnung ist bei einer Düsenanordnung 82 in **Fig. 15** ein Distanzelement 83 vorgesehen, welches mittels einer Schraube 84 unmittelbar mit einem Düsenkörper 85 verbunden ist. Die Düsenanordnung 82 ist somit nicht wie bei der in **Fig. 13** dargestellten Düsenanordnung mit einer Formplatte 86 verschraubt.

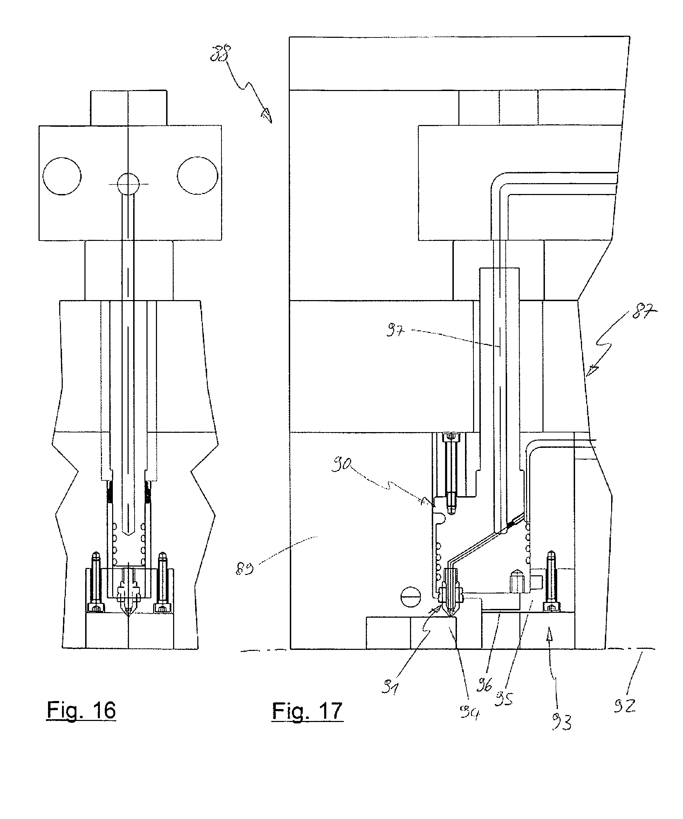

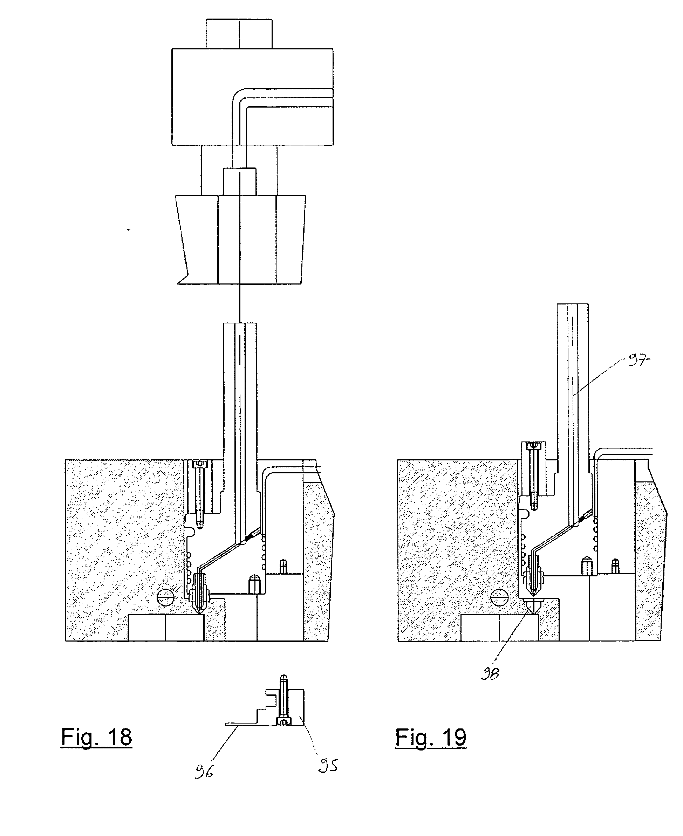

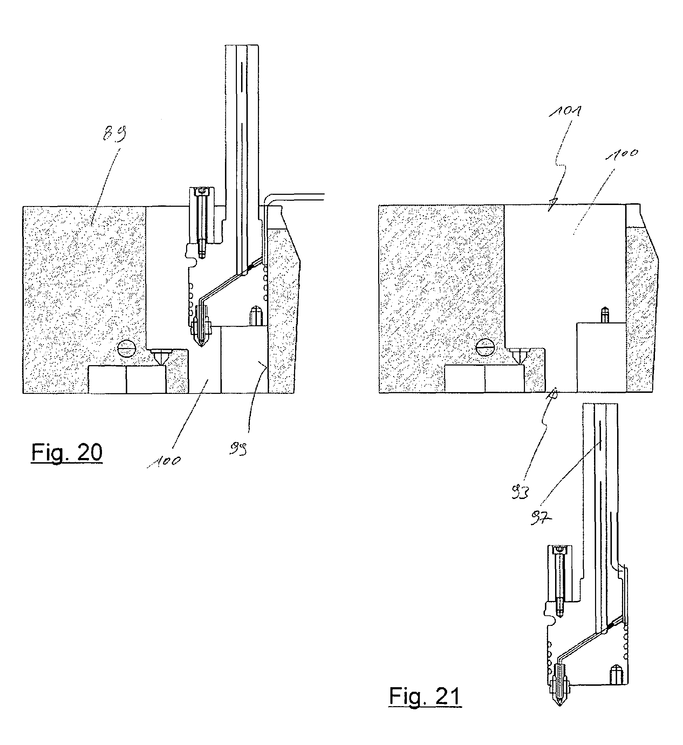

Die **Fig. 16** bis **21** zeigen eine Düsenanordnung 87 mit einem Formwerkzeug 88 bzw. einer Formplatte 89 sowie eine Abfolge möglicher Demontageschritte einer Düsenvorrichtung 90 aus der Formplatte 89. Im Unterschied zu der in **Fig. 1** dargestellten Düsenvorrichtung ist hier eine Spitzeneinrichtung 91 orthogonal zu einer Öffnungsebene 92 einer Montageöffnung 93 der Formplatte 89 angeordnet. Demnach ist auch eine Formkavität 94 in der Formplatte 89 unterhalb der Düsenvorrichtung 90 angeordnet. Ein Positionierelement 95 weist hier ergänzend eine Blende 96 auf, welche die Montageöffnung 93 vollständig verschießen und vor Verschmutzungen schützen kann. Für eine Demontage der Düsenanordnung 87 aus der Formplatte 89 wird zunächst das Positionierelement 95 entfernt und nachfolgend die Düsenvorrichtung 90 in Richtung einer Längsachse 97 der Düsenvorrichtung 90 angehoben, so dass die Spitzeneinrichtung 91 aus einer Kanalbohrung 98 vollständig entnommen werden kann. Danach wird die Düsenvorrichtung 90 in horizontaler Richtung bis an eine Innenwandung 99 einer Ausnehmung 100 der Formplatte 89 bewegt, und kann wieder in Richtung der Längsachse 97 nach unten durch die Montageöffnung 93, oder hier wahlweise auch nach oben durch eine weitere Montageöffnung 101, aus der Ausnehmung 100 entfernt werden.

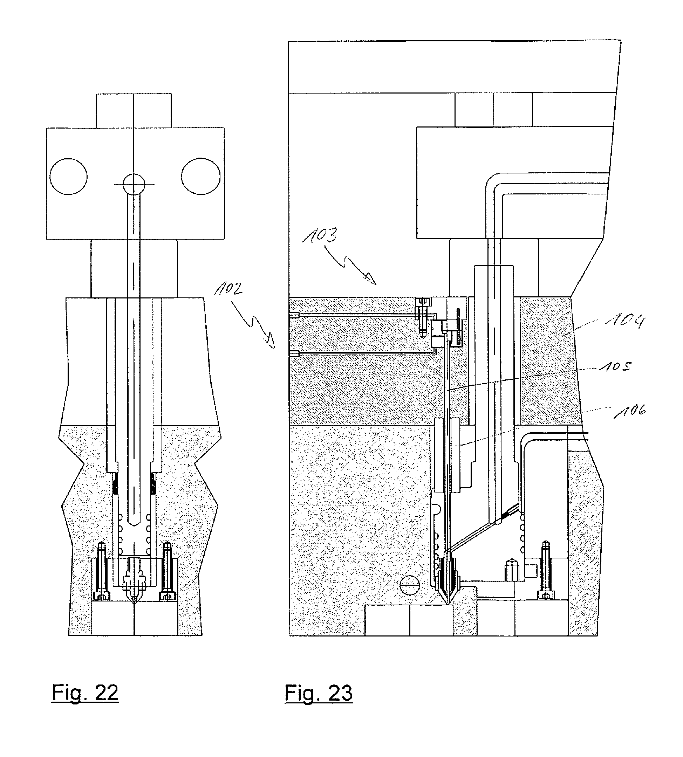

Die **Fig. 22** und **23** zeigen eine Düsenanordnung 102, die um Unterschied zu der in **Fig. 1**6 dargestellten Düsenanordnung eine Nadelverschlusseinrichtung 103 aufweist. Die Nadelverschlusseinrichtung 103 ist im Wesentlichen in Art der in **Fig. 11** abgebildeten Nadelverschlusseinrichtung ausgebildet, jedoch in einer Rahmenplatte 104 angeordnet. Insbesondere ist eine Düsennadel 105 durch ein Distanzelement 106 hindurchgeführt.

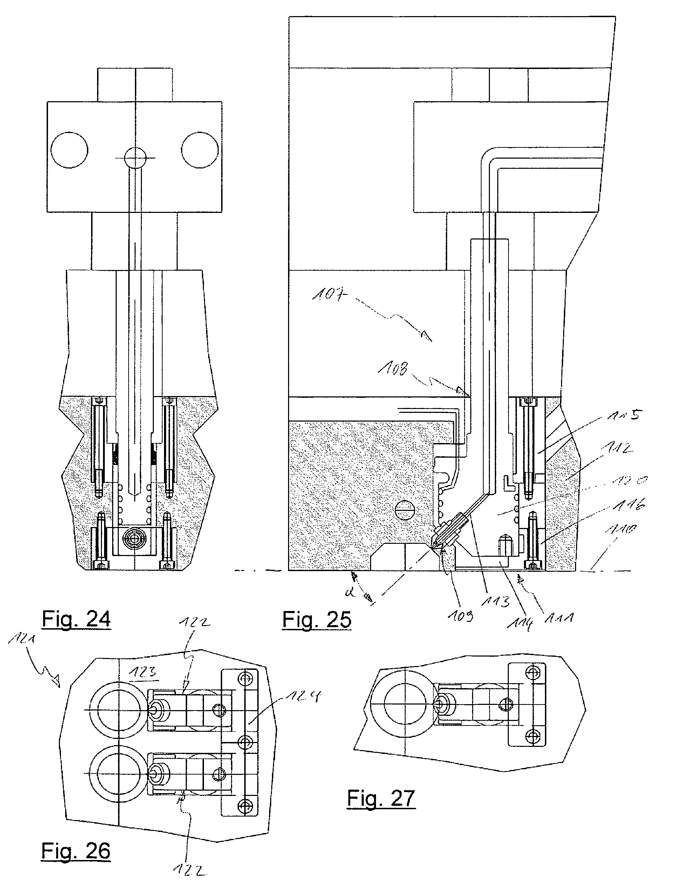

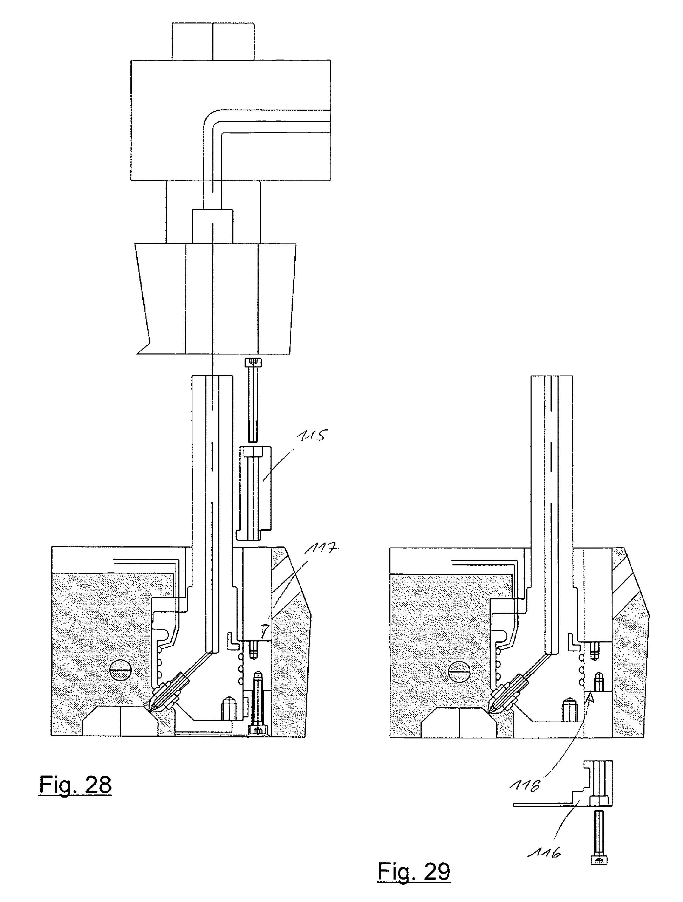

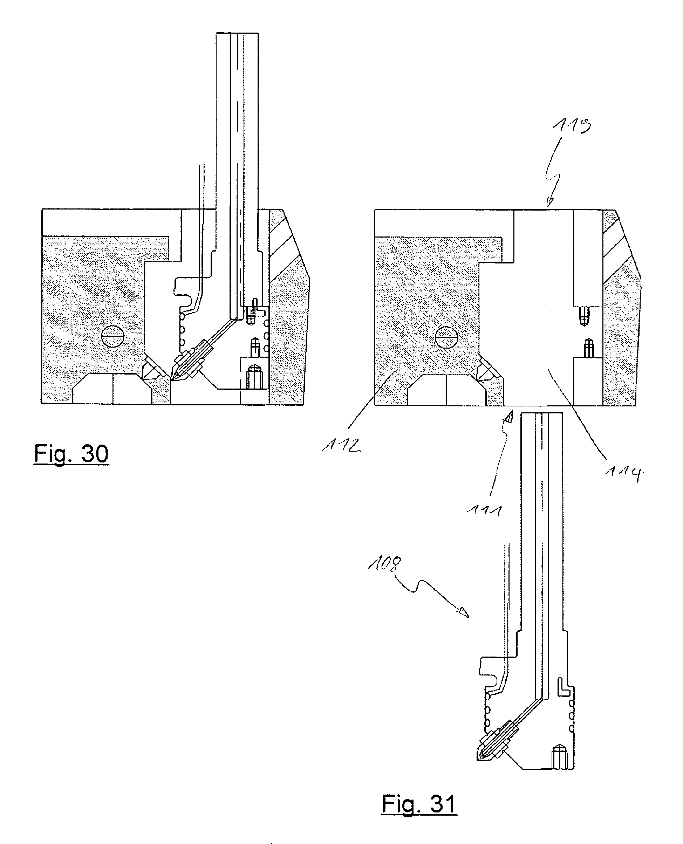

Die **Fig. 24, 25** sowie **27** bis **31** zeigen eine Düsenanordnung 107 mit einer Düsenvorrichtung 108 bei der eine Spitzeneinrichtung 109 relativ zu einer Öffnungsebene 110 einer Montageöffnung 111 in einer Formplatte 112 angeordnet ist. Eine Längsachse 113 der Spitzeneinrichtung 109 ist insbesondere in einem Winkel a von ca. 45° relativ zur Öffnungsebene 110 ausgerichtet. Weiter sind in einer Ausnehmung 114 der Formplatte 112 zwei Positionierelemente 115 und 116 jeweils in Befestigungsabsätzen 1 17 bzw. 118 angeordnet. Im Unterschied zu den zuvor beschriebenen Düsenanordnungen ist das Positionierelement 115 in eine obere Montageöffnung 1 19 der Ausnehmung 114 eingesetzt und fixiert zusammen mit dem Positionierelement 116 einen Düsenkörper 120 der Düsenvorrichtung 108 in vertikaler als auch in horizontaler Richtung. Für eine Demontage der Düsenanordnung 107 werden zunächst die beiden Positionierelemente 115 und 116 aus der Ausnehmung 114 entfernt. Dann kann die Düsenvorrichtung 108 wahlweise durch die Montageöffnung 111 oder die Montageöffnung 1 19 aus der Formplatte 112 entnommen werden.

Die **Fig. 26** zeigt eine weitere Ausführungsform einer Düsenanordnung 121, wobei im Unterschied zu der in **Fig. 27** dargestellten Düsenanordnung zwei Düsenvorrichtungen 122 in einer Formplatte 123 mit einem einzelnen Positionierelement 124 angeordnet sind.

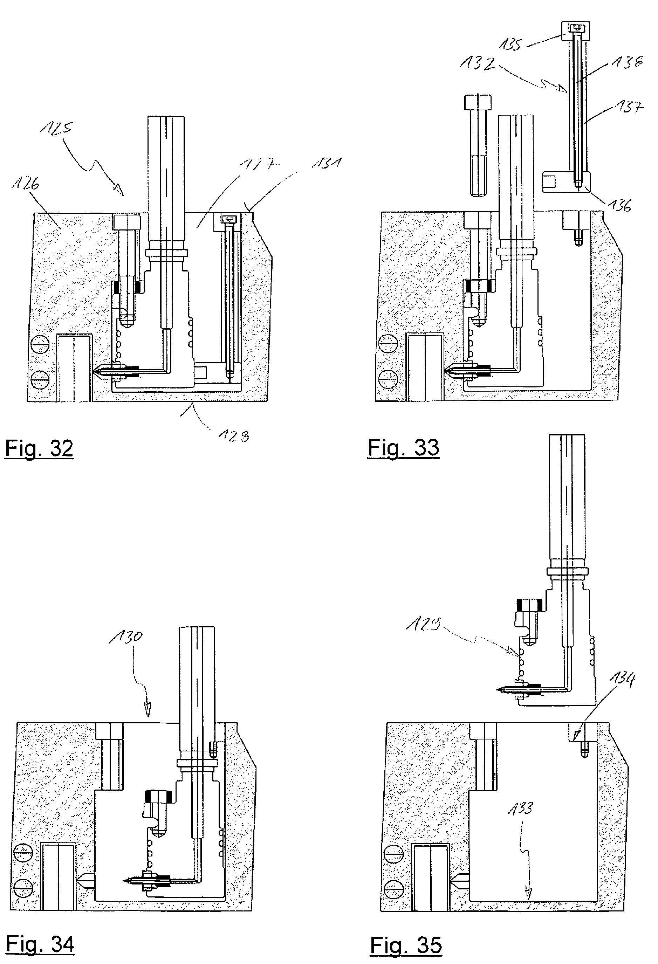

Den **Fig. 32** bis **35** ist eine Düsenanordnung 125 mit einer Formplatte 126 sowie eine Abfolge von Montageschritten zu entnehmen. Die Formplatte 126 weist eine Ausnehmung 127 auf, die im Bereich einer Unterseite 128 der Formplatte 126 vollständig geschlossen ist. Eine Düsenvorrichtung 129 kann daher nur über eine Montageöffnung 130 in einer Oberseite 131 der Formplatte 123 entnommen werden. Ein Positionierelement 133 muss dazu an der Düsenvorrichtung 129 im Bereich eines Bodens 133 der Ausnehmung 127 angeordnet werden. Ein Befestigungsabsatz 134 ist gegenüber der Ausnehmung 127 relativ flach ausgebildet. Das Positionierelement 132 ist daher mehrteilig ausgebildet, bestehend aus einem Befestigungsträger 135 zur Anordnung im Befestigungsabsatz 134, einem Positionierstück 136 zur Anordnung in der Ausnehmung 127 bzw. Fixierung der Düsenvorrichtung 129, einem Verlängerungsstück 137 sowie einer Schraube 138 zur Verbindung des Befestigungsträgers 135 mit dem Positionierstück 136. Eine Demontage der Düsenanordnung erfolgt vom Grundsatz wie bei den vorbeschriebenen Düsenanordnungen, jedoch alleine über die Montageöffnung 130 auf der Oberseite 131 der Formplatte 126.

## Patentansprüche

1. Düsenanordnung (10, 49, 53, 59, 62, 65, 79, 82, 87, 102, 107, 121, 125) zum Anspritzen von insbesondere Kunststoffformteilen, mit zumindest einer Düsenvorrichtung (20, 50, 54, 61, 90, 108, 122, 129), wobei die Düsenvorrichtung in eine Formplatte (15, 52, 56, 63, 67, 86, 89, 112, 123, 126) eines Formwerkzeugs (11, 66, 88) einsetzbar ist, wobei die Düsenvorrichtung einen Düsenkörper (22, 71, 85, 120) mit zumindest einer Spitzeneinrichtung (23, 57, 60, 91, 109) umfasst, wobei die Spitzeneinrichtung über eine Außenfläche (46) des Düsenkörpers hervorragt, wobei in der Formplatte eine Formkavität (16, 58, 94) und eine Ausnehmung (21, 78, 100, 114, 127) zur Aufnahme der Düsenvorrichtung ausgebildet ist, wobei die Spitzeneinrichtung zusammen mit der Ausnehmung der Formplatte einen Einspritzkanal (29) für die Formkavität ausbildet, wobei die Ausnehmung eine Montageöffnung (45, 93, 101, 111, 119, 130) für die Düsenvorrichtung ausbildet,
**dadurch gekennzeichnet,**
**dass** die Düsenvorrichtung in eine unteilbare Formplatte einsetzbar ist, wobei die Düsenvorrichtung zusammen mit der Spitzeneinrichtung durch die Montageöffnung in die Ausnehmung einsetzbar ist, wobei zumindest ein Positionierelement (37, 51, 55, 70, 80, 95, 115, 116, 124, 132) vorgesehen ist, welches so in die Montageöffnung einsetzbar ist, dass die Düsenvorrichtung in der Ausnehmung formschlüssig fixierbar ist.

2. Düsenanordnung nach Anspruch 1,
**dadurch gekennzeichnet,**
**dass** das Positionierelement (37, 51, 55, 70, 80, 95, 115, 116, 124, 132) an einer der Spitzeneinrichtung (23, 57, 60, 91, 109) abgewandten Oberfläche (39) des Düsenkörpers (22, 71, 85, 120) anordbar ist.

3. Düsenanordnung nach Anspruch 1 oder 2,
**dadurch gekennzeichnet,**
**dass** die Düsenvorrichtung (20, 50, 54, 61, 90, 108, 122, 129) eine Breite b und die Montageöffnung (45, 93, 101, 111, 119, 130) eine Breite b+n aufweisen, wobei die Ausnehmung (21, 78, 100, 114, 127) eine Montagebreite b+x+n und das Positionierelement (37, 51, 55, 70, 80, 95, 115, 116, 124, 132) eine Breite x+n aufweisen.

4. Düsenanordnung nach Anspruch 3,
**dadurch gekennzeichnet,**
**dass** die Breite x+n des Positionierelements (37, 51, 55, 70, 80, 95, 115, 116, 124, 132) so ausgebildet ist, dass das Positionierelement bei einer Betriebstemperatur der Düsenvorrichtung (20, 50, 54, 61, 90, 108, 122, 129) die Düsenvorrichtung kraftschlüssig in der Ausnehmung (21, 78, 100, 114, 127) fixiert.

5. Düsenanordnung nach einem der vorangehenden Ansprüche,
**dadurch gekennzeichnet,**
**dass** das Positionierelement (37, 51, 55, 70, 80, 95, 115, 116, 124, 132) eine Ausnehmung (21, 78, 100, 114, 127) aufweist, die so ausgebildet ist, dass eine Kontaktfläche zwischen einer Oberfläche (39) des Düsenkörpers (22, 71, 85, 120) und einer Anlagefläche des Positionierelements minimiert wird.

6. Düsenanordnung nach einem der vorangehenden Ansprüche,
**dadurch gekennzeichnet,**
**dass** das Positionierelement (80, 95, 116, 124) so ausgebildet ist,
**dass** es eine Kante (81) des Düsenkörpers (85, 120) umgreift.

7. Düsenanordnung nach einem der vorangehenden Ansprüche,
**dadurch gekennzeichnet,**
**dass** das Positionierelement (37, 51, 55, 70, 80, 95, 115, 116, 124, 132) so ausgebildet ist, dass es mittels eines Befestigungselements (42) mit der Formplatte (15, 52, 56, 63, 67, 86, 89, 112, 123, 126) lösbar verbindbar ist.

8. Düsenanordnung nach einem der vorangehenden Ansprüche,
**dadurch gekennzeichnet,**
**dass** die Düsenvorrichtung eine Nadelverschlusseinrichtung (68, 103) umfasst.

9. Düsenanordnung nach einem der vorangehenden Ansprüche,
**dadurch gekennzeichnet,**
**dass** am Düsenkörper eine Mehrzahl von Spitzeneinrichtungen (57, 60) ausgebildet sind.

10. Düsenanordnung nach einem der vorangehenden Ansprüche,
**dadurch gekennzeichnet,**
**dass** Mehrzahl von Düsenvorrichtungen (50, 122) mittels eines Positionierelements (51, 124) fixierbar sind.

11. Düsenanordnung nach einem der vorangehenden Ansprüche,
**dadurch gekennzeichnet,**
**dass** am Düsenkörper (22, 71, 85) ein Distanzelement (34, 83, 106) angeordnet ist, dass den Düsenkörper relativ zu einer Öffnungsebene (92) der Montageöffnung der Formplatte (15, 52, 56, 63, 67, 86, 89, 123, 126) in vertikaler Richtung positionieren kann.

12. Düsenanordnung nach einem der vorangehenden Ansprüche,
**dadurch gekennzeichnet,**
**dass** zwei Positionierelemente (115, 116) jeweils von einer Unterseite und einer gegenüberliegenden Oberseite der Formplatte (112) in die Ausnehmung (114) einsetzbar sind.

13. Düsenanordnung nach einem der vorangehenden Ansprüche,
**dadurch gekennzeichnet,**
**dass** der Düsenkörper (22, 71) mit der Formplatte (15, 52, 56, 63, 67, 112, 123, 126) verschraubbar ist.

14. Düsenanordnung nach einem der vorangehenden Ansprüche,
**dadurch gekennzeichnet,**
**dass** am Düsenkörper (22, 71, 85, 120) ein Zuführleitungselement (19) angeordnet ist, das selbstdichtend mit einem Heißkanalverteiler (13) verbindbar ist.

15. Düsenanordnung nach einem der vorangehenden Ansprüche,
**dadurch gekennzeichnet,**
**dass** eine Längsachse der Spitzeneinrichtung (23, 57, 60) relativ zu einer Öffnungsebene der Montageöffnung (45, 130) parallel ausgebildet ist.

16. Düsenanordnung nach einem der Ansprüche 1 bis 14,
**dadurch gekennzeichnet,**
**dass** eine Längsachse der Spitzeneinrichtung (91) relativ zu einer Öffnungsebene (92) der Montageöffnung (93, 101) orthogonal ausgebildet ist.

17. Düsenanordnung nach einem der Ansprüche 1 bis 14,
**dadurch gekennzeichnet,**
**dass** eine Längsachse (113) der Spitzeneinrichtung (109) relativ zu einer Öffnungsebene (110) der Montageöffnung (111, 119) schräg unter einem Winkel α ausgebildet ist.

18. Formplatte für eine Düsenanordnung (10, 49, 53, 59, 62, 65, 79, 82, 87, 102, 107, 121, 125) nach einem der vorangehenden Ansprüche,
**dadurch gekennzeichnet,**
**dass** die Formplatte (15, 52, 56, 63, 67, 86, 89, 112, 123, 126) unteilbar ausgebildet ist, wobei in der Formplatte eine Montageöffnung (45, 93, 101, 111, 119, 130) für eine Düsenvorrichtung (20, 50, 54, 61, 90, 108, 122, 129) ausgebildet ist, wobei in der Montageöffnung ein Befestigungsabsatz (35, 64, 117, 118, 134) für ein Positionierelement (37, 51, 55, 70, 80, 95, 115, 116, 124, 132) ausgebildet ist.

19. Formplatte nach Anspruch 18,
**dadurch gekennzeichnet,**
**dass** die Montageöffnung (45, 93, 101, 111, 119, 130) in einer der Formkavität (16, 58, 94) zugewandten Unterseite (44) und/oder einer der Formkavität abgewandten Oberseite (131) der Formplatte (15, 52, 56, 63, 67, 86, 89, 112, 123, 126) ausgebildet ist.

20. Verfahren zur Montage einer Düsenvorrichtung (20, 50, 54, 61, 90, 108, 122, 129) zum Anspritzen von insbesondere Kunststoffformteilen in einer Formplatte (15, 52, 56, 63, 67, 86, 89, 112, 123, 126) eines Formwerkzeugs (11, 66, 88), wobei die Düsenvorrichtung einen Düsenkörper (22, 71, 85, 120) mit zumindest einer Spitzeneinrichtung (23, 57, 60, 91, 109) umfasst, wobei die Spitzeneinrichtung über eine Außenfläche (46) des Düsenkörpers hervorragt, wobei in der Formplatte eine Formkavität (16, 58, 94) und eine Ausnehmung (21, 78, 100, 114, 127) zur Aufnahme der Düsenvorrichtung ausgebildet ist, wobei die Ausnehmung eine Montageöffnung (45, 93, 101, 111, 119, 130) für die Düsenvorrichtung ausbildet, durch die die Düsenvorrichtung in die Ausnehmung eingesetzt wird, derart, dass die Spitzeneinrichtung zusammen mit der Ausnehmung der Formplatte einen Einspritzkanal (29) für die Formkavität ausbildet,
**dadurch gekennzeichnet,**
**dass** die Düsenvorrichtung in eine unteilbare Formplatte eingesetzt wird, wobei die Düsenvorrichtung zusammen mit der Spitzeneinrichtung durch die Montageöffnung in die Ausnehmung eingesetzt wird, wobei nachfolgend zumindest ein Positionierelement (37, 51, 55, 70, 80, 95, 115, 116, 124, 132) so in die Montageöffnung eingesetzt wird, dass die Düsenvorrichtung in der Ausnehmung formschlüssig fixiert wird.

## Claims

1. A nozzle arrangement (10, 49, 53, 59, 62, 65, 79, 82, 87, 102, 107, 121, 125) for spraying in particular plastic molded parts, comprising at least one nozzle device (20, 50, 54, 61, 90, 108, 122, 129), wherein the nozzle device can be inserted into a die plate (15, 52, 56, 63, 67, 86, 89, 112, 123, 126) of a molding tool (11, 66, 88), wherein the nozzle device comprises a nozzle body (22, 71, 85, 120) comprising at least one tip device (23, 57, 60, 91, 109), wherein the tip device projects beyond an outer surface (46) of the nozzle body, wherein a mold cavity (16, 58, 94) and a recess (21, 78, 100, 114, 127) for accommodating the nozzle device is embodied in the die plate, wherein the tip device together with the recess of the die plate embodies an injection channel (29) for the mold cavity, wherein the recess forms an assembly opening (45, 93, 101, 111, 119, 130) for the nozzle device,
**characterized in**
**that** the nozzle device can be inserted into an indivisible die plate, wherein the nozzle device together with the tip device can be inserted into the recess through the assembly opening, wherein provision is made for at least one positioning element (37, 51, 55, 70, 80, 95, 115, 116, 124, 132), which can be inserted into the assembly opening such that the nozzle device can be fixed positively in the recess.

2. The nozzle arrangement according to claim 1,
**characterized in**
**that** the positioning element (37, 51, 55, 70, 80, 95, 115, 116, 124, 132) can be arranged at a surface (39) of the nozzle body (22, 71, 85, 120), which faces away from the tip device (23, 57, 60, 91, 109).

3. The nozzle arrangement according to claim 1 or 2,
**characterized in**
**that** the nozzle device (20, 50, 54, 61, 90, 108, 122, 129) encompasses a width b and the assembly opening (45, 93, 101, 111, 119, 130) encompasses a width b+n, wherein the recess (21, 78, 100, 114, 127) encompasses an assembly width b+x+n and the positioning element (37, 51, 55, 70, 80, 95, 115, 116, 124, 132) encompasses a width x+n.

4. The nozzle arrangement according to claim 3,
**characterized in**
**that** the width x+n of the positioning element (37, 51, 55, 70, 80, 95, 115, 116, 124, 132) is embodied such that the positioning element non-positively fixes the nozzle device in the recess (21, 78, 100, 114, 127) in response to an operating temperature of the nozzle device (20, 50, 54, 61, 90, 108, 122, 129).

5. The nozzle arrangement according to one of the preceding claims,
**characterized in**
**that** the positioning element (37, 51, 55, 70, 80, 95, 115, 116, 124, 132) encompasses a recess (21, 78, 100, 114, 127), which is embodied such that a contact surface between a surface (39) of the nozzle body (22, 71, 85, 120) and a bearing surface of the positioning element is minimized.

6. The nozzle arrangement according to one of the preceding claims,
**characterized in**
**that** the positioning element (80, 95, 116, 124) is embodied such that it encloses an edge (81) of the nozzle body (85, 120).

7. The nozzle arrangement according to one of the preceding claims,
**characterized in**
**that** the positioning element (37, 51, 55, 70, 80, 95, 115, 116, 124, 132) is embodied such that it can be connected to the die plate (15, 52, 56, 63, 67, 86, 89, 112, 123, 126) by means of a fastening element (42) so as to be capable of being removed.

8. The nozzle arrangement according to one of the preceding claims,
**characterized in**
**that** the nozzle device comprises a needle valve device (68, 103).

9. The nozzle arrangement according to one of the preceding claims,
**characterized in**
**that** a plurality of tip devices (57, 60) is embodied on the nozzle body.

10. The nozzle arrangement according to one of the preceding claims,
**characterized in**
**that** the plurality of nozzle devices (50, 122) can be fixed by means of a positioning element (51, 124).

11. The nozzle arrangement according to one of the preceding claims,
**characterized in**
**that** a distancing element (34, 83, 106), which can position the nozzle body relative to an opening plane (92) of the assembly opening of the die plate (15, 52, 56, 63, 67, 86, 89, 123, 126) in vertical direction, is arranged on the nozzle body (22, 71, 85).

12. The nozzle arrangement according to one of the preceding claims,
**characterized in**
**that** two positioning elements (115, 116) can in each case be inserted into the recess (114) from a bottom side and from an opposite upper side of the die pate (112).

13. The nozzle arrangement according to one of the preceding claims,
**characterized in**
**that** the nozzle body (22, 71) can be screwed to the die plate (15, 52, 56, 63, 67, 112, 123, 126).

14. The nozzle arrangement according to one of the preceding claims,
**characterized in**
**that** a supply line element (19), which can be connected to a hot runner (13) in a self-sealing manner, is arranged on the nozzle body (22, 71, 85, 120).

15. The nozzle arrangement according to one of the preceding claims,
**characterized in**
**that** a longitudinal axis of the tip device (23, 57, 60) is embodied so as to be parallel relative to an opening plane of the assembly opening (45, 130).

16. The nozzle arrangement according to one of claims 1 to 14,
**characterized in**
**that** a longitudinal axis of the tip device (91) is embodied so as to be orthogonal relative to an opening plane (92) of the assembly opening (93, 101).

17. The nozzle arrangement according to one of claims 1 to 14,
**characterized in**
**that** a longitudinal axis (113) of the tip device (109) is arranged so as to be oblique under an angle α relative to an opening plane (110) of the assembly opening (111, 119).

18. A die plate for a nozzle arrangement (10, 49, 53, 59, 62, 65, 79, 82, 87, 102, 107, 121, 125) according to one of the preceding claims,
**characterized in**
**that** the die plate (15, 52, 56, 63, 67, 86, 89, 112, 123, 126) is embodied so as to be indivisible, wherein an assembly opening (45, 93, 101, 111, 119, 130) for a nozzle device (20, 50, 54, 61, 90, 108, 122, 129) is embodied in the die plate, wherein a fastening offset (35, 64, 117, 118, 134) for a positioning element (37, 51, 55, 70, 80, 95, 115, 116, 124, 132) is embodied in the assembly opening.

19. The die plate according to claim 18,
**characterized in**
**that** the assembly opening (45, 93, 101, 111, 119, 130) is embodied in a bottom side (44) facing the mold cavity (16, 58, 94) and/or in an upper side (131) of the die plate (15, 52, 56, 63, 67, 86, 89, 112, 123, 126), which faces away from the mold cavity.

20. A method for assembling a nozzle device (20, 50, 54, 61, 90, 108, 122, 129) for spraying for spraying in particular plastic molded parts in a die plate (15, 52, 56, 63, 67, 86, 89, 112, 123, 126) of a molding tool (11, 66, 88), wherein the nozzle device comprises a nozzle body (22, 71, 85, 120) comprising at least one tip device (23, 57, 60, 91, 109), wherein the tip device projects beyond an outer surface (46) of the nozzle body, wherein a mold cavity (16, 58, 94) and a recess (21, 78, 100, 114, 127) for accommodating the nozzle device is embodied in the die plate, wherein the recess forms an assembly opening (45, 93, 101, 111, 119, 130) for the nozzle device, through which the nozzle device is inserted into the recess such that the tip device together with the recess of the die plate embodies an injection channel (29) for the mold cavity,
**characterized in**
**that** the nozzle device is inserted into an indivisible die plate, wherein the nozzle device together with the tip device is inserted into the recess through the assembly opening, wherein at least one positioning element (37, 51, 55, 70, 80, 95, 115, 116, 124, 132) is subsequently inserted into the assembly opening such that the nozzle device is fixed positively in the recess.

## Revendications

1. Ensemble de buses (10, 49, 53, 59, 62, 65, 79, 82, 87, 102, 107, 121, 125) pour l'injection directe notamment de pièces en matière plastique, avec au moins un dispositif de buses (20, 50, 54, 61, 90, 108, 122, 129), le dispositif de buses étant insérable dans une plaque-modèle (15, 52, 56, 63, 67, 86, 89, 112, 123, 126) d'un outil de formage (11, 66, 88), le dispositif de buses comprenant un corps de buse (22, 71, 85, 120) avec au moins un système de pointes (23, 57, 60, 91, 109), le système de pointes saillant par-dessus une surface extérieure (46) du corps de buse, dans la plaque-modèle étant ménagés une cavité de moule (16, 58, 94) et un évidement (21, 78, 100, 114, 127) pour le logement du dispositif de buses, le système de pointes formant en commun avec l'évidement de la plaque-modèle un canal d'injection (29) pour la cavité de moule, l'évidement formant un orifice de montage (45, 93, 101, 111, 119, 130) pour le dispositif de buses, **caractérisé en ce que** le dispositif de buses est insérable dans une plaque-modèle indivisible, le dispositif de buses étant insérable ensemble avec le système de pointes à travers l'orifice de montage dans l'évidement, au moins un élément de positionnement (37, 51, 55, 70, 80, 95, 115, 116, 124, 132) étant prévu, lequel est insérable dans l'orifice de montage, de telle sorte que le dispositif de buses puisse être fixé par complémentarité de forme dans l'évidement.

2. Ensemble de buses selon la revendication 1, **caractérisé en ce que** les éléments de positionnement (37, 51, 55, 70, 80, 95, 115, 116, 124, 132) peuvent être disposés sur une surface (39) du corps de buse (22, 71, 85, 120) qui est opposée au système de pointes (23, 57, 60, 91, 109).

3. Ensemble de buses selon la revendication 1 ou 2, **caractérisé en ce que** le dispositif de buses (20, 50, 54, 61, 90, 108, 122, 129) présente une largeur b et l'orifice de montage (45, 93, 101, 111, 119, 130) une largeur b+n ; l'évidement (21, 78, 100, 114, 127) présentant une largeur de montage b+x+n et l'élément de positionnement (37, 51, 55, 70, 80, 95, 115, 116, 124, 132) présentant une largeur x+n.

4. Ensemble de buses selon la revendication 3, **caractérisé en ce que** la largeur x+n de l'élément de positionnement (37, 51, 55, 70, 80, 95, 115, 116, 124, 132) est conçue de sorte qu'à une température de service du dispositif de buses (20, 50, 54, 61, 90, 108, 122, 129), l'élément de positionnement fixe le dispositif de buses par complémentarité de force dans l'évidement (21, 78, 100, 114, 127).

5. Ensemble de buses selon l'une quelconque des revendications précédentes, **caractérisé en ce que** l'élément de positionnement (37, 51, 55, 70, 80, 95, 115, 116, 124, 132) comporte un évidement (21, 78, 100, 114, 127), qui est conçu de sorte à minimiser une surface de contact entre une surface (39) du corps de buse (22, 71, 85, 120) et une surface d'appui de l'élément de positionnement.

6. Ensemble de buses selon l'une quelconque des revendications précédentes, **caractérisé en ce que** l'élément de positionnement (80, 95, 116, 124) est conçu de sorte à entourer une arête (81) du corps de buse (85, 120).

7. Ensemble de buses selon l'une quelconque des revendications précédentes, **caractérisé en ce que** l'élément de positionnement (37, 51, 55, 70, 80, 95, 115, 116, 124, 132) est conçu de sorte qu'au moyen d'un élément de fixation (42), il puisse être relié de façon amovible avec la plaque-modèle (15, 52, 56, 63, 67, 86, 89, 112, 123, 126).

8. Ensemble de buses selon l'une quelconque des revendications précédentes, **caractérisé en ce que** le dispositif de buses comprend un système d'obturateur à aiguille (68, 103).

9. Ensemble de buses selon l'une quelconque des revendications précédentes, **caractérisé en ce que** sur le corps de buse est conçue une pluralité de systèmes de pointes (57, 60).

10. Ensemble de buses selon l'une quelconque des revendications précédentes, **caractérisé en ce qu'**une pluralité de dispositifs de buses (50, 122) peut être fixée au moyen d'un élément de positionnement (51, 124) .

11. Ensemble de buses selon l'une quelconque des revendications précédentes, **caractérisé en ce que** sur le corps de buse (22, 71, 85) est disposé un écarteur (34, 83, 106) susceptible de positionner le corps de buse par rapport à un plan d'ouverture (92) de l'orifice de montage de la plaque-modèle (15, 52, 56, 63, 67, 86, 89, 123, 126) en direction verticale.

12. Ensemble de buses selon l'une quelconque des revendications précédentes, **caractérisé en ce que** deux éléments de positionnement (115, 116) sont insérables chacun dans l'évidement (114) à partir d'une face inférieure et d'une face supérieure opposée de la plaque-modèle (112).

13. Ensemble de buses selon l'une quelconque des revendications précédentes, **caractérisé en ce que** le corps de buse (22, 71) peut se visser sur la plaque-modèle (15, 52, 56, 63, 67, 112, 123, 126).

14. Ensemble de buses selon l'une quelconque des revendications précédentes, **caractérisé en ce que** sur le corps de buse (22, 71, 85, 120) est disposé un élément de conduit d'amenage (19) qui peut se relier de manière auto-étanche avec un distributeur par canal chaud (13).

15. Ensemble de buses selon l'une quelconque des revendications précédentes, **caractérisé en ce qu'**un axe longitudinal du système de pointes (23, 57, 60) est conçu en parallèle par rapport à un niveau d'ouverture de l'orifice de montage (45, 130).

16. Ensemble de buses selon l'une quelconque des revendications 1 à 14, **caractérisé en ce qu'**un axe longitudinal du système de pointes (91) est conçu sous forme orthogonale par rapport à un niveau d'ouverture (92) de l'orifice de montage (93, 101).

17. Ensemble de buses selon l'une quelconque des revendications 1 à 14, **caractérisé en ce qu'**un axe longitudinal (113) du système de pointes (109) est conçu en inclinaison sous un angle α par rapport à un niveau d'ouverture (110) de l'orifice de montage (111, 119).

18. Plaque-modèle pour un ensemble de buses (10, 49, 53, 59, 62, 65, 79, 82, 87, 102, 107, 121, 125) selon l'une quelconque des revendications précédentes, **caractérisée en ce que** la plaque-modèle (15, 52, 56, 63, 67, 86, 89, 112, 123, 126) est conçue en version indivisible, dans la plaque-modèle étant ménagé un orifice de montage (45, 93, 101, 111, 119, 130) pour un dispositif de buses (20, 50, 54, 61, 90, 108, 122, 129), dans l'orifice de montage étant conçu un talon de fixation (35, 64, 117, 118, 134) pour un élément de positionnement (37, 51, 55, 70, 80, 95, 115, 116, 124, 132).

19. Plaque-modèle selon la revendication 18, **caractérisée en ce** l'orifice de montage (45, 93, 101, 111, 119, 130) est conçu dans une face inférieure (44) faisant face à la cavité de moule (16, 58, 94) et/ou dans une face supérieure (131) opposée à la cavité de moule de la plaque-modèle (15, 52, 56, 63, 67, 86, 89, 112, 123, 126).

20. Procédé de montage d'un dispositif de buses (20, 50, 54, 61, 90, 108, 122, 129) pour l'injection directe notamment de pièces en matière plastique dans une plaque-modèle (15, 52, 56, 63, 67, 86, 89, 112, 123, 126) d'un outil de formage (11, 66, 88), le dispositif de buses comprenant un corps de buse (22, 71, 85, 120) avec au moins un système de pointes (23, 57, 60, 91, 109), le système de pointes saillant par-dessus une surface extérieure (46) du corps de buse, dans la plaque-modèle étant conçus une cavité de moule (16, 58, 94) et un évidement (21, 78, 100, 114, 127) pour le logement du dispositif de buses, l'évidement formant un orifice de montage (45, 93, 101, 111, 119, 130) pour le dispositif de buses, à travers lequel on insère le dispositif de buses dans l'évidement, de telle sorte, que le système de pointes forme avec l'évidement de la plaque-modèle un canal d'injection (29) pour la cavité de moule, **caractérisé en ce qu'**on insère le dispositif de buses dans une plaque-modèle indivisible, le dispositif de buses étant inséré ensemble avec le système de pointes à travers l'orifice de montage dans l'évidement, par la suite, au moins un élément de positionnement (37, 51, 55, 70, 80, 95, 115, 116, 124, 132) étant inséré dans l'orifice de montage, de telle sorte que le dispositif de buses soit fixé par complémentarité de forme dans l'évidement.
